# FASCICULE DE BREVET EUROPEEN

(11) **EP 2 010 612 B1**
(45) Date de publication et mention de la délivrance du brevet: **03.06.2020**
(21) Numéro de dépôt: 07788936.8
(22) Date de dépôt: 12.04.2007
(51) Int. Cl.: C09D 5/08, C09C 3/08, C09C 3/10, C09C 3/12, C09C 1/00, C08K 9/06, C09D 183/06, C09C 1/30, C09C 1/36, C09C 1/40, C09D 183/04

(54) **UTILISATION D'UN MATERIAU NANOSTRUCTURE, COMME REVETEMENT PROTECTEUR DE SURFACES METALLIQUES**
VERWENDUNG EINES NANOSTRUKTURIERTEN MATERIALS ALS SCHUTZBESCHICHTUNG FÜR METALLOBERFLÄCHEN
USE OF A NANOSTRUCTURED MATERIAL, AS PROTECTIVE COATING OF METAL SURFACES

(30) Priorité: 13.04.2006 FR 0603306
(43) Date de publication de la demande: 07.01.2009
(73) Titulaire: AIRBUS (SAS), 31700 Blagnac (FR); Université Pierre et Marie Curie, 75252 Paris Cedex 05 (FR); CENTRE NATIONAL DE LA RECHERCHE SCIENTIFIQUE -CNRS-, 75794 Paris Cedex 16 (FR)
(72) Inventeur: CAMPAZZI, Elisa, F-92100 Boulogne Billancourt (FR); GOLETTO, Valérie, F-75013 Paris (FR); SANCHEZ, Clément, F-91440 Bures sur Yvette (FR)
(74) Mandataire: Gicquel, Olivier Yves Gérard
(86) Numéro de dépôt international: PCT/FR2007/051098
(87) Numéro de publication internationale: WO 2007/119023

(56) Documents cités:
- EP-A2- 0 846 730
- WO-A-01/94262
- WO-A2-02/061173
- WO-A2-2005/045144
- US-A1- 2003 157 344
- SANCHEZ C: "Designed Hybrid Organic-Inorganic Nanocomposites from Functional Nanobuilding Blocks" CHEMISTRY OF MATERIALS, vol. 13, 15 octobre 2001 (2001-10-15), pages 3061-3083, XP002410968 cité dans la demande

## Description

La présente invention concerne l'utilisation d'un matériau comprenant au moins un nanobloc élémentaire et une matrice de type polymère ou hybride organique/inorganique, comme constituant d'un revêtement protecteur de surfaces métalliques, en particulier pour des applications aéronautiques et aérospatiales, et un matériau nanostructuré particulier.

Dans le domaine aéronautique, la protection contre la corrosion est généralement assurée par des traitements de surface à base de chrome VI, par exemple, au moyen d'un procédé d'oxydation anodique chromique, ou d'une couche de conversion.

Cependant, on a trouvé que le chrome VI était toxique, cancérigène et dangereux pour l'environnement. A terme son utilisation va être interdite.

Il existe donc un besoin de trouver un autre système assurant une protection, par exemple, contre la corrosion mais aussi contre les rayures ou autres, qui soit au moins aussi performant que ceux existant.

Des matériaux hybrides organiques/inorganiques préparés par voie sol-gel ont déjà été envisagés dans la technique.

Par exemple, le document US 2003/024432 décrit un revêtement ayant des propriétés anti-corrosion, préparé par voie sol-gel à partir d'un sel organométallique tel qu'un alcoxyzirconium, d'un organosilane, et d'un ou de plusieurs composés portant une fonction borate, zinc ou phosphate, en présence d'un catalyseur organique tel que l'acide acétique.

Les documents US 6 261 638 et EP 1 097 259 décrivent quant à eux des procédés pour empêcher la corrosion de métaux, comprenant l'application d'une solution de traitement à base de silanes polyfonctionnels et de silanes difonctionnels comportant dans leur chaîne, plusieurs atomes de soufre, respectivement.

D'autres matériaux sont connus des documents WO 01/94262 et EP 0 846 730.

Par exemple, une dispersion colloïdale d'un composé de cérium seul ou en combinaison avec un composé d'un autre élément choisi parmi les terres rares et les métaux de transition, comprenant un acide aminé, est décrite dans WO 01/94262.

De EP 0 846 730 est connu un revêtement présentant une bonne résistance d'adhérence au substrat, préparé à base d'une composition vulcanisable à température ambiante. Ladite composition comprend un mélange d'un organopolysiloxane particulier, d'un alcoxysilane, d'un carbonate de calcium traité en surface et d'un catalyseur de condensation.

Cependant, ces matériaux présentent l'inconvénient de ne pas être micro- ou nanostructurés, c'est-à-dire que la répartition des domaines organiques et inorganiques dans le matériau ne peut pas être maîtrisée à l'échelle micrométrique ou nanométrique. Cette répartition aléatoire peut conduire à des propriétés non reproductibles d'un matériau à un autre.

Un avantage du procédé sol-gel consiste à construire un réseau tridimensionnel à partir de précurseurs de départ dans des conditions dites douces, c'est-à-dire à une température inférieure à 200 °C, et dans un milieu eau ou eau/solvant moins nocif pour l'environnement que ceux utilisés pour les traitements de surface classiques.

Les précurseurs de départ généralement utilisés dans ledit procédé sol-gel sont des alcoxydes métalliques comprenant un ou plusieurs groupes hydrolysables. A titre d'exemples d'alcoxydes métalliques, on peut notamment citer les alcoxydes de silicium ou de zirconium, seuls ou en mélange.

L'article « The self-assembled nanophase particle (SNAP) process : a nanoscience approach to coatings », M. S. Donley et al, Progress in Organic Coatings, 47, 401-415, 2003, décrit des revêtements en un matériau amorphe, obtenus dans des conditions douces, à partir d'une solution aqueuse comprenant du tétraméthoxysilane et du glycidopropyltriméthoxysilane. Un inhibiteur de corrosion est ensuite introduit dans le matériau.

Le brevet US 6 929 826 décrit un procédé de traitement de surfaces métalliques à partir d'une composition aqueuse comprenant un alcoxysilane, un époxyalcoxysilane et de l'eau. Ce procédé comprend notamment les étapes de mélange des ingrédients de la composition, le vieillissement de ladite composition, l'addition d'un agent de réticulation, d'un tensioactif et éventuellement d'eau, puis l'application de la composition finale sur un substrat métallique et séchage dudit substrat.

Le demandeur a découvert de manière surprenante qu'un contrôle de structure à l'échelle nanométrique permet d'obtenir de nouvelles propriétés macroscopiques qui ne sont pas seulement la somme des propriétés de chacune des composantes telles que tenue mécanique, épaisseur et qualité du film, densité, coloration et caractère hydrophobe modulable à souhait, mais réellement des propriétés nouvelles. Elles résultent de la synergie de ces composantes à l'échelle nanométrique. En outre, cette maîtrise de la structure à l'échelle nanométrique conduit à une reproductibilité des propriétés.

Ce contrôle est atteint grâce à des matériaux composites nanostructurés.

Par matériaux nanostructurés, on entend des matériaux dont la structure est contrôlée à l'échelle nanométrique. Cette structure peut être vérifiée notamment par diffraction des rayons X et diffusion des rayons X aux petits angles, microscopie à transmission (ou TEM) ou microscopie à force atomique (ou AFM).

Ces matériaux sont connus de l'article "Designed hybrid organic-inorganic nanocomposites from functional nanobuilding blocks" de C. Sanchez et al, Chem. Mater., 2001, 13, 3061-3083, et sont synthétisés à partir de blocs élémentaires de taille nanométrique (ou nanoblocs élémentaires ou NBB (Nano-Building Blocks)) bien définis, de préférence pré- ou post-fonctionnalisés, et d'une résine polymère ou hybride organique/inorganique.

Une partie de ces matériaux, telle que la matrice obtenue par voie sol/gel, est amorphe, tandis que l'autre partie est constituée de domaines cristallins de taille nanométrique.

Ces matériaux peuvent comporter des fonctionnalités diverses qui permettent de conférer à un substrat (ou surface) notamment un alliage d'aluminium ou de titane, par exemple, une protection contre la corrosion, une résistance aux rayures, une bonne tenue mécanique et/ou une coloration tout en assurant une bonne adhérence sur le substrat métallique.

En outre, ces matériaux peuvent permettre la coexistence de plusieurs fonctionnalités différentes qui ne coexistent pas en temps normal, et peuvent être appliqués par une quelconque technique classique telle que, par exemple, par trempage dans un bain, dépôt sur substrat en rotation (ou spin-coating), aspersion, enduction laminaire et dépôt au pinceau. Les composants individuels peuvent être conçus de manière à avoir une durée de vie compatible avec les cycles industriels, par exemple, supérieure ou égale à 12 mois, et être mélangés juste avant leur application. Leur formulation présente l'avantage supplémentaire d'utiliser des composants compatibles avec la réglementation environnementale, et notamment d'être en majoritairement en milieu aqueux.

La présente invention a donc pour objet l'utilisation d'un tel matériau comme constituant d'un revêtement protecteur multifonctionnel de surfaces métalliques, notamment dans l'aéronautique et dans l'aérospatiale, comme par exemple sur des éléments structurels d'avion.

Ce matériau est constitué de nanoblocs élémentaires fonctionnalisés en surface et d'une matrice polymère ou hybride organique/inorganique, c'est-à-dire une matrice comprenant à la fois des groupements organiques et minénaux, la fonctionnalisation desdits nanoblocs élémentaires se faisant en présence d'un agent de fonctionnalisation qui est une molécule difonctionnelle dont une des fonctions présente une affinité pour la surface du nanobloc élémentaire et l'autre fonction interagit avec la matrice.

Ces nanoblocs élémentaires peuvent être sous forme de clusters ou de nanoparticules, de préférence de nanoparticules de taille allant de 2 à 100 nm, mieux encore de 2 à 50 nm, encore mieux de 2 à 20 nm, plus préférentiellement de 2 à 10 nm et encore plus préférentiellement de 2 à 5 nm, le diamètre de ces nanoparticules pouvant être mesuré par diffraction des rayons X et diffusion des rayons X aux petits angles, microscopie à transmission (ou TEM) ou diffusion de la lumière.

De préférence, les nanoparticules ont une taille présentant une faible dispersion.

Ces nanoblocs élémentaires sont essentiellement à base d'au moins un oxyde métallique, l'oxyde métallique étant choisi par exemple, parmi les oxydes d'aluminium, de cérium III et IV, de silicium, de zirconium, de titane et d'étain, mieux encore parmi les oxydes de zirconium et de cérium IV. Plusieurs procédés de synthèse peuvent être utilisés pour les préparer.

Un premier procédé consiste à les synthétiser à partir de sels métalliques, par précipitation. Des agents complexants peuvent être introduits dans le milieu réactionnel pour contrôler la taille des nanoblocs élémentaires formés et assurer leur dispersion dans le solvant par fonctionnalisation de 80 à 100 % de la surface des nanoblocs avec des agents complexants monodentates ou polydentates, tels que par exemple, acide carboxylique, β-dicétone, β-cétoester, α- ou β-hydroxyacide, phosphonate, polyamine et acide aminé. Le rapport pondéral entre les composantes minérale et organique est compris notamment entre 20 et 95 %.

Les nanoblocs élémentaires peuvent également être obtenus à partir d'au moins un alcoxyde métallique ou halogénure métallique via des processus hydrolytiques ou non hydrolytiques. Dans le cas d'un processus hydrolytique, on réalise l'hydrolyse contrôlée d'au moins un précurseur alcoxyde métallique ou halogénure métallique de formule générale :

MZₙ (1),

R'ₓMZₙ₋ₓ (2)

ou

L^{m}ₓMZₙ₋ₘₓ (3),

formules (1), (2) et (3) dans lesquelles :
M représente Al(III), Ce(III), Ce(IV), Si(IV), Zr(IV), Ti(IV) ou Sn(IV), de préférence Zr(IV) ou Ce(IV), le chiffre entre parenthèse étant la valence de l'atome métallique,
n représente la valence de l'atome M,
x est un nombre entier allant de 1 à n-1,
Z représente un atome d'halogène tel que F, Cl, Br et I, de préférence Cl et Br, ou -OR ;
R représente un groupe alkyle comprenant de préférence 1 à 4 atomes de carbone, tel qu'un groupe méthyle, éthyle, n-propyle, i-propyle ou butyle, de préférence méthyle ou éthyle ;
R' représente un groupe non hydrolysable choisi parmi les groupes alkyle notamment en C₁₋₄, par exemple, méthyle, éthyle, propyle ou butyle ; les groupes alcényle en particulier en C₂₋₄, tels que vinyle, 1-propényle, 2-propényle et butényle ; les groupes alcynyle en particulier en C₂₋₄, tels que acétylényle et propargyle ; les groupes aryle en particulier en C₆₋₁₀, tels que phényle et naphthyle ; les groupes méthacryle ou méthacryloxy(alkyle en C₁₋₁₀) tel que méthacryloxypropyle ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀) ;
L est un ligand complexant monodentate ou polydentate, de préférence polydentate, par exemple, un acide carboxylique comme l'acide acétique, une β-dicétone comme l'acétylacétone, un β-cétoester comme l'acétoacétate de méthyle, un α- ou β-hydroxyacide comme l'acide lactique, un acide aminé comme l'alanine, une polyamine comme la (3-triméthoxysilylpropyl)diéthylènetriamine (ou DETA), ou un phosphonate comme l'acide phosphonique ; et
m représente l'indice d'hydroxylation du ligand L, avec m=1 lorsque L est un ligand monodentate, et m ≥ 2 lorsque L est un ligand polydentate. De préférence 3 ≥ m ≥ 2 lorsque L est un ligand polydentate.

Par hydrolyse contrôlée, on entend une limitation de la croissance des espèces formées par contrôle de la quantité d'eau introduite dans le milieu et éventuellement par introduction d'un agent complexant de l'atome central métallique, ceci afin de réduire la réactivité des précurseurs.

Les nanoblocs élémentaires, de préférence sous forme de nanoparticules amorphes ou cristallisées, utilisés dans la présente invention sont fonctionnalisés en surface. La fonctionnalisation desdits nanoblocs élémentaires se fait en présence d'un agent de fonctionnalisation qui est une molécule difonctionnelle dont une des fonctions présente une affinité pour la surface du nanobloc élémentaire et l'autre fonction interagit avec la matrice.

Leur fonctionnalisation est réalisée soit directement au cours de leur synthèse, soit au cours d'une deuxième étape suivant leur synthèse, en présence d'un agent de fonctionnalisation, et de préférence au cours d'une deuxième étape. On parle respectivement de pré- ou post-fonctionnalisation.

On peut réaliser la post-fonctionnalisation par voie chimique, en choisissant une molécule difonctionnelle comme agent de fonctionnalisation, dont une des fonctions présente une affinité pour la surface du nanobloc élémentaire et l'autre fonction pourra interagir avec la matrice mais ne présentera aucune affinité pour la surface du nanobloc élémentaire. La fonctionnalisation par voie chimique permet ainsi une modification de la surface des nanoblocs, notamment par simple mélange d'une solution contenant les nanoblocs élémentaires avec une solution contenant l'agent de fonctionnalisation.

Comme exemples de fonction présentant une affinité pour la surface du nanobloc, on peut notamment citer une fonction acide carboxylique, une fonction di-cétone, une fonction phosphate ou phosphonate, une fonction α- ou β-hydroxyacide ou un complexe polydentate de métaux de transition.

Comme exemples de fonction pouvant interagir avec la matrice, on peut notamment citer les groupes amines primaires, secondaires ou tertiaires tels qu'alkylamino en C₁₋₈, et les fonctions polymérisables telles que vinyle, acrylate ou méthacrylate.

A titre d'exemples de molécules di-fonctionnelles utilisées comme agent de fonctionnalisation, on peut notamment citer l'acide 6-aminocaproïque et l'acide 2-aminoéthylphosphonique.

Selon l'invention, le taux de fonctionnalisation est de préférence supérieur à 50 %, mieux encore supérieur à 80 %.

Une fois les nanoblocs élémentaires synthétisés et fonctionnalisés, ils sont introduits dans une matrice polymère ou hybride inorganique/organique, de préférence hybride de type sol/gel, mieux encore à base de silice, et encore plus préférentiellement constituée de silice ou de silice/oxyde de zirconium. Cette matrice va servir de connecteur grâce auquel les blocs élémentaires vont former un réseau tridimensionnel.

Les matrices hybrides inorganiques/organiques sont typiquement obtenues par polycondensation d'au moins deux alcoxydes métalliques ou halogénures métalliques en présence d'un solvant, et éventuellement d'un catalyseur. Les alcoxydes métalliques ou halogénures métalliques employés sont choisis parmi ceux ayant pour formules générales :

M'Z'_{n'} (IV)

R"_{x'}M'Z'_{n'-x'} (V)

L'_{m'x'}M'Z'_{n'-m'x'} (VI)

Z'_{n'-1}M'-R'''-MZ'_{n'-1} (VII)

dans lesquelles :
n' représente la valence de l'atome métallique M', de préférence 3, 4 ou 5 ;
x' est un nombre entier allant de 1 à n'-1 ;
M' représente un atome métallique de valence III tel que Al ; un atome métallique de valence IV tel que Si, Ce, Zr et Ti ; ou un atome métallique de valence V tel que Nb. De préférence M' est le silicium (n'=4), le cérium (n'=4) ou le zirconium (n'=4), et encore plus préférentiellement le silicium ;
Z' représente un groupe hydrolysable choisi parmi les atomes d'halogène, par exemple, F, Cl, Br et I, de préférence Cl et Br ; les groupes alcoxy de préférence en C₁₋₄, tels que méthoxy, éthoxy, n-propoxy, i-propoxy et butoxy ; les groupes aryloxy en particulier en C₆₋₁₀, tels que phénoxy ; les groupes acyloxy en particulier en C₁₋₄, tels que acétoxy et propionyloxy ; et les groupes alkylcarbonyle en C₁₋₁₀ comme acétyle. De préférence, Z' représente un groupe alcoxy, et plus particulièrement un groupe éthoxy ou méthoxy ;
R" représente un groupement non hydrolysable monovalent choisi parmi les groupes alkyle de préférence en C₁₋₄, par exemple, méthyle, éthyle, propyle et butyle ; les groupes alcényle en particulier en C₂₋₄, tels que vinyle, 1-propényle, 2-propényle et butényle ; les groupes alcynyle en particulier en C₂₋₄ tels que acétylényle et propargyle ; les groupes aryle en particulier en C₆₋₁₀, tels que phényle et naphthyle ; les groupes méthacryle et méthacryloxy(alkyle en C₁₋₁₀) tel que méthacryloxypropyle ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀). R" représente de préférence un groupe méthyle ou glycidyloxy(alkyle en C₁₋₁₀) comme glycidyloxypropyle ;
R'" représente un groupement non hydrolysable divalent choisi parmi les groupes alkylène de préférence en C₁₋₄, par exemple, méthylène, éthylène, propylène et butylène ; les groupes alcénylène en particulier en C₂₋₄, tels que vinylène, 1-propénylène, 2-propénylène et buténylène ; les groupes alcynylène en particulier en C₂₋₄ tels que acétylénylène et propargylène ; les groupes arylène en particulier en C₆₋₁₀, tels que phénylène et naphthylène ; les groupes méthacryle et méthacryloxy(alkyle en C₁₋₁₀) tel que méthacryloxypropyle : et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone, tels que glycidyle et glycidyloxy(alkyle en C₁₋₁₀). R'" représente de préférence un groupe méthylène ou glycidyloxy(alkyle en C₁₋₁₀) comme glycidyloxypropyle ; et
L' représente un ligand complexant tel que celui décrit pour L ci-dessus, et
m' représente l'indice d'hydroxylation du ligand L', avec m'=1 lorsque L' est un ligand monodentate, et m' ≥ 2 lorsque L' est un ligand polydentate.

Dans un mode de réalisation préféré, la matrice est obtenue à partir d'un mélange d'au moins trois alcoxydes de silicium :

Si(OR¹)₄

R²Si(OR¹)₃

et

R³R⁴Si(OR¹)₂

dans lesquels :
R¹ représente un groupe méthyle ou éthyle,
R² et R³ représentent chacun un groupe (méth)acrylate, vinyle, époxyalkyle ou époxyalcoxyalkyle dans lesquels le groupe alkyle est linéaire, ramifié et/ou cyclique, en C₁₋₁₀, et le groupe alcoxy comporte de 1 à 10 atomes, par exemple le groupe 3,4-époxycyclohexyléthyle ou glycidyloxy(alkyle en C₁₋₁₀) tel que glycidyloxypropyle, et
R⁴ représente un groupe alkyle en C₁₋₁₀ tel que méthyle.

De préférence, la proportion du précurseur R²Si(OR¹)₃ est majoritaire, tandis que celle du précurseur R³R⁴Si(OR¹)₂ est minoritaire, par exemple de 5 à 30 % en poids, mieux encore de l'ordre de 20 % en poids par rapport au poids total du mélange de précurseurs.

Le solvant est constitué majoritairement d'eau. De préférence, il comprend 80 à 100 % en poids d'eau par rapport au poids total du solvant, et éventuellement un alcool en C₁₋₄, de préférence l'éthanol ou l'isopropanol.

Le catalyseur est de préférence un acide, mieux encore l'acide acétique, ou du CO₂.

La solution à déposer est composée majoritairement d'un mélange de silanes, par exemple de 5 à 30 % en poids, de préférence de l'ordre de 20 % en poids par rapport au poids total de la solution. Le rapport molaire d'acide par rapport au silicium est préférentiellement autour de 1 %. Les rapports molaires des nanoblocs élémentaires fonctionnalisés ajoutés par rapport au silicium sont inférieurs à 20 %. Par exemple, ils sont préférentiellement de 5 % et de 10 % pour l'oxyde de cérium et l'oxyde de zirconium respectivement.

On prépare un matériau nanostructuré selon l'invention d'une part :
- en préparant les nanoblocs élémentaires, notamment par un processus hydrolytique ou non comme décrit ci-dessus,
- en fonctionnalisant les nanoblocs élémentaires,
d'autre part
- en préparant la matrice,
puis
- en mélangeant les nanoblocs élémentaires fonctionnalisés et la matrice.

Au moins un additif peut être éventuellement ajouté, soit lors de la préparation des nanoblocs élémentaires, soit lors du mélange des nanoblocs élémentaires fonctionnalisés et la matrice, soit lors de ces deux étapes.

Dans le cas où un additif est ajouté lors de la préparation des nanoblocs élémentaires, il peut se former un matériau final de type noyau/enveloppe, le noyau étant constitué par l'additif et l'enveloppe étant constituée par un nanobloc élementaire.

Les additifs pouvant être utilisés dans l'invention sont notamment des agents tensioactifs pour améliorer la mouillabilité du sol sur le substrat métallique, tels que les polymères non ioniques fluorés vendus sous les marques commerciales FC 4432 et FC4430 par la société 3M ; des colorants, par exemple la rhodamine, la fluorescéine, le bleu de méthylène et l'éthyl-violet ; des agents de réticulation comme la (3-triméthoxysilylpropyl)diethylènetriamine ; des agents de couplage tels que l'aminopropyltriéthoxysilane (APTS) ; des nanopigments ; des inhibiteurs de corrosion tels que le benzotriazole, ou leurs mélanges

Des exemples de surfaces métalliques utilisées pour être revêtues par le matériau nanostructuré décrit ci-dessus, sont le titane, l'aluminium et leurs alliages respectifs, comme par exemple le titane TA6V, l'aluminium de la famille 2000, plus particulièrement l'Al 2024 plaqué ou non plaqué, l'aluminium de la famille 7000, plus particulièrement l'Al 7075 ou 7175 et l'aluminium de la famille 6000 ou 5000.

Les revêtements de telles surfaces métalliques, obtenus à partir des matériaux nanostructurés tels que décrits ci-dessus permettent notamment d'obtenir une protection contre la corrosion, une résistance aux rayures, coloration et caractère hydrophobe modulable à souhait, tout en adhérant bien à la surface du substrat métallique.

En outre, ces revêtements sont déposés au moyen de techniques simples à mettre en œuvre sur les surfaces métalliques, par exemple par trempage dans un bain, dépôt sur substrat en rotation (ou spin-coating), aspersion, enduction laminaire ou dépôt au pinceau. En outre, ces techniques utilisent des produits compatibles avec l'environnement.

Un autre objet de la présente invention est un matériau nanostructuré particulier comprenant des nanoblocs élémentaires fonctionnalisés tels que décrits ci-dessus et une matrice hybride organique/inorganique préparée à partir d'au moins trois alcoxydes métalliques particuliers répondant aux formules suivantes :

Si(OR¹)₄

R²Si(OR¹)₃

et

R³R⁴Si(OR¹)₂

dans lesquelles R¹, R², R³ et R⁴ sont tels que définis ci-dessus.

Le matériau nanostructuré particulier selon l'invention peut être préparé selon un procédé comprenant notamment les étapes consistant à :
d'une part
a) préparer les nanoblocs élémentaires par un processus hydrolytique ou non, à partir d'au moins un alcoxyde métallique tel que décrit ci-dessus, et
b) fonctionnaliser les nanoblocs élémentaires au moyen d'un agent de fonctionnalisation tel que décrit ci-dessus,
   d'autre part
c) préparer la matrice hybride organique/inorganique par voie sol-gel, à partir des trois alcoxydes de silicium tels que définis ci-dessus, la préparation par voie sol-gel se faisant en présence d'un solvant, et éventuellement d'un catalyseur tels que décrits ci-dessus,
   puis
d) mélanger les nanoblocs élémentaires fonctionnalisés obtenus à l'étape b) et la matrice obtenue à l'étape c). et

Au moins un additif tel que décrit ci-dessus peut être éventuellement ajouté lors de l'étape a) ou lors de l'étape d) ou lors des deux étapes a) et d).

Dans le cas où un additif est ajouté lors de l'étape a), il peut se former un matériau final de l'étape d) de type noyau/enveloppe, le noyau étant constitué par l'additif et l'enveloppe étant constituée par un nanobloc élémentaire.

Ce procédé s'effectue dans des conditions dites douces, c'est-à-dire à température ambiante de l'ordre de 20 à 25 °C, et sous pression atmosphérique.

L'invention a encore pour objet un article comprenant un substrat métallique, par exemple en titane, en aluminium ou en un de leurs alliages, et un matériau nanostructuré particulier tel que défini ci-dessus.

Cet article selon l'invention peut être préparé par un procédé de revêtement classique qui comprend une étape de trempage dans un bain, de dépôt sur substrat en rotation, d'aspersion, d'enduction laminaire ou de dépôt au pinceau d'au moins un matériau nanostructuré particulier tel que défini ci-dessus.

L'invention et les avantages qu'elle apporte seront mieux compris grâce aux exemples de réalisation donnés ci-après à titre indicatif.

### EXEMPLES

### Exemple 1 : préparation d'une solution de NBB-1 par fonctionnalisation de nanoparticules d'oxyde de cérium par l'acide 6-aminocaproïque.

On a dissous 81 mg d'acide 6-aminocaproïque dans 1 ml de solution colloïdale de nanoparticules de CeO₂ dans H₂O, vendue sous la marque commerciale Rhodigard W200 par la société Rhodia. On a obtenu un taux de fonctionnalisation r=n_{acide}/n_{CeO2}= 0,5 mesuré par analyse thermogravimétrique et confirmée par analyse Infra-Rouge à Transformée de Fourier (FT-IR) sur poudre.

### Exemple 2 : préparation d'une solution de NBB-2 par fonctionnalisation de nanoparticules d'oxyde de cérium par l'acide 6-aminocaproïque.

On a dissous 162 mg d'acide 6-aminocaproïque dans 1 ml de suspension colloïdale de nanoparticules de CeO₂ dans H₂O, vendue sous la marque commerciale Rhodigard W200 par la société Rhodia. On a obtenu un taux de fonctionnalisation r=n_{acide}/n_{CeO2}= 1.

### Exemple 3 : préparation d'une solution de NBB-3 par fonctionnalisation de d'oxyde de cérium par l'acide 2-aminoéthylphosphonique

On a ajouté 48,75mg d'acide 2-aminoéthylphosphonique à 1 ml de la solution vendue sous la marque commerciale Rhodigard W200 par la société Rhodia. On a obtenu un taux de fonctionnalisation r= n_{acide}/n_{CeO2}=0,3.

### Exemple 4 : préparation d'une solution de NBB-4

A une solution contenant 4,55 g d'acétylacétone et 13,75 g de propanol-1, on a ajouté 18,67 g de tétraisopropoxyde de zirconium en solution à 70% en poids dans le propanol-1. On a ajouté au mélange précédent agité à température ambiante, une solution contenant 6,01 g d'acide para-toluènesulfonique et 7,895 g d'eau. On a agité la solution 5 minutes à température ambiante puis fermé le flacon dans lequel se trouvait la solution et on l'a laissé 24 h dans une étuve à 60°C.

### Exemple 5 : préparation d'une solution de NBB-5 par fonctionnalisation de nanoparticules d'oxyde de zirconium par l'acide 6-aminocaproïque.

A 5 ml de la solution de NBB-4 décrite ci-dessus, on a ajouté 524 mg d'acide 6-aminocaproïque. On a laissé la solution sous agitation jusqu'à la dissolution totale de l'acide aminé, ce qui a nécessité environ 12 heures.

Pour les exemples 1 à 5 ci-dessus, le diamètre hydrodynamique des particules fonctionnalisées obtenues a été estimé par diffusion à la lumière, comme étant compris entre 2 et 10 nm.

### Exemple 6 : préparation d'une solution contenant l'agent de mouillage vendu sous la marque commerciale FC-4432 par la société 3M

On a préparé une solution à 10 % en poids de l'agent de mouillage dans l'isopropanol.

### Exemple 7 : NBB-2 + matrice GPTMS/TMOS/GMDES (rapport molaire = 2,5/1/0,5)

A 6,4 ml d'une solution d'acide acétique (0,05 mol./l (ou M)), on a ajouté goutte à goutte, sous agitation, à température ambiante, le mélange de 0,93g de tétraméthoxysilane (TMOS), de 3,734 g de 3-glycidoxypropyltriméthoxysilane (GPTMS) et de 0,77 g de 3-glycidoxypropylméthyldiethoxysilane (GMDES).

On a conservé la solution sous agitation à température ambiante dans un flacon fermé pendant 6 jours. Le 6^{ème} jour, on a introduit dans le mélange, la solution de NBB-2 préparée dans l'exemple 2, en une quantité telle que le rapport molaire Ce/Siₜₒₜ est de 0,05. On a ainsi obtenu une solution (A) limpide de couleur jaune qui a été maintenue sous agitation.

Quelques minutes avant le dépôt d'un film, on a ajouté à la solution (A) une quantité déterminée de la solution d'agent de mouillage de l'exemple 6, de manière à obtenir dans le mélange final une proportion massique de 0,04% d'agent de mouillage, par rapport au poids total du mélange.

On a préparé le substrat en alliage Al 2024 T3 non plaqué, de dimension 125 x 80 x 1,6 mm, pour une surface totale de 2 dm², juste avant le dépôt, selon une méthodologie connue de l'homme du métier comme le dégraissage alcalin suivi d'un décapage chimique acide, de formulation compatible avec la réglementation environnementale.

On a déposé un film sur le substrat par immersion de ce dernier dans le mélange final pendant 90 secondes puis retrait et séchage à température ambiante.

### Exemple 8 : NBB-2 + matrice GPTMS/TMOS/GMDES (rapport molaire = 2,5/1/0,5) + colorant

On a préparé une solution (A) de la même manière que dans l'exemple 7. On a dissous dans la solution (A) une quantité donnée de rhodamine B correspondant à une concentration de colorant dans la solution de 10⁻³ M. Instantanément, la solution a pris une teinte rose prononcée.

Quelques minutes avant le dépôt du film, on a ajouté à la solution précédente la solution d'agent de mouillage de l'exemple 6 de manière à obtenir un mélange final comprenant une proportion de 0,04% en poids de ce dernier par rapport au poids total du mélange final.

On a préparé le substrat juste avant le dépôt de la même manière que dans l'exemple 7.

On a déposé un film sur le substrat par immersion de ce dernier dans le mélange final pendant 90 secondes puis retrait et séchage à température ambiante.

### Exemple 9 : NBB-2 + matrice GPTMS/TMOS/DMDES (rapport molaire = 2,5/1/0,5)

A 6,4 ml d'une solution d'acide acétique (0,05M), on a ajouté goutte à goutte, sous agitation, à température ambiante, le mélange de 0,93g de tétraméthoxysilane (TMOS), de 3,734 g de 3-glycidoxypropyltriméthoxysilane (GPTMS) et de 0,49 g de diméthyldiéthoxysilane (DMDES).

On a conservé la solution sous agitation à température ambiante dans un flacon fermé pendant 1 jour. Après un jour de vieillissement du sol, on a ajouté la solution de NBB-2 en une quantité telle que le rapport molaire Ce/Siₜₒₜ est de 0,05. On a laissé sous agitation 30 minutes pour obtenir une solution (B).

On y a ajouté ensuite la solution contenant l'agent de mouillage de l'exemple 6, de manière à obtenir une concentration d'agent de mouillage de 0,04% en poids dans le mélange final.

On a préparé le substrat juste avant le dépôt de la même manière que dans l'exemple 7.

On a déposé un film sur le substrat par immersion de ce dernier dans le mélange final pendant 90 secondes puis retrait et séchage à température ambiante.

### Exemple 10 : NBB-2 + NBB-4 + matrice GPTMS/TMOS/DMDES (rapport molaire = 2,5/1/0,5)

On a préparé une solution (B) de la même manière que dans l'exemple 9, puis on y a ajouté 7 ml de solution de NBB-4. On a laissé agiter quelques minutes pour obtenir la solution (C).

On y a introduit ensuite la solution d'agent de mouillage de l'exemple 6 de manière à obtenir une concentration d'agent de mouillage de 0,04% en poids dans le mélange final.

On a préparé le substrat juste avant le dépôt de la même manière que dans l'exemple 7.

On a déposé un film sur le substrat par immersion de ce dernier dans le mélange final pendant 90 secondes puis retrait et séchage à température ambiante.

On a préparé deux éprouvettes. Après séchage de l'une d'entre elles 24 h à température ambiante, on l'a traitée à 110 °C pendant 30 minutes.

### Exemple 11 : NBB-2 + NBB-4 + matrice GPTMS/TMOS/DMDES (rapport molaire = 2,5/1/0,5) + agent de réticulation diéthylènetriamine (DETA)

On a préparé une solution (C) de la même manière que dans l'exemple 10.

On a ajouté ensuite 576 mg de DETA à la solution (C), puis quelques minutes après, la solution d'agent de mouillage de l'exemple 6 de manière à obtenir une concentration d'agent de mouillage de 0,04% en poids dans le mélange final.

On a préparé le substrat juste avant le dépôt de la même manière que dans l'exemple 7.

On a déposé un film sur le substrat par immersion de ce dernier dans le mélange final pendant 90 secondes puis retrait et séchage à température ambiante.

On a préparé deux éprouvettes. Après séchage de l'une d'entre elles 24 h à température ambiante, on l'a traitée à 110 °C pendant 30 minutes.

### Exemple 12 : NBB-2 + NBB-4 + matrice GPTMS/TMOS/DMDES (rapport molaire = 2,5/1/0,5) + agent de couplage aminopropyltriéthoxysilane (APTS)

On a préparé une solution (C) de la même manière que dans l'exemple 10. On y a introduit ensuite 3,2 g d'APTS, puis quelques minutes après, on a introduit la solution d'agent de mouillage de l'exemple 6 de manière à obtenir une concentration d'agent de mouillage de 0,04% en poids dans le mélange final.

On a préparé le substrat juste avant le dépôt de la même manière que dans l'exemple 7.

On a déposé un film sur le substrat par immersion de ce dernier dans le mélange final pendant 90 secondes puis retrait et séchage à température ambiante.

On a préparé deux éprouvettes. Après séchage de l'une d'entre elles 24 h à température ambiante, on l'a traitée à 110 °C pendant 30 minutes.

### Exemple 13 : NBB-3 + matrice GPTMS/TMOS/DMDES (rapport molaire = 2,5/1/0,5)

A 6,4 ml d'une solution d'acide acétique (0,05M), on a ajouté goutte à goutte, sous agitation, à température ambiante, le mélange de 0,93 g de tétraméthoxysilane (TMOS), de 3,734 g de 3-glycidoxypropyltriméthoxysilane (GPTMS) et de 0,49 g de diméthyldiéthoxysilane (DMDES). 30 minutes plus tard, on a introduit 1 ml de solution de NBB-3. On a laissé agiter à température ambiante pendant 24 h. On a réalisé un dépôt sur le substrat en rotation (ou spin-coating) tournant à 1500 tours par minute, et on l'a laissé sécher à température ambiante.

### Exemple 14 : NBB-5 + matrice GPTMS/TMOS/DMDES (rapport molaire = 2,5/1/0,5)

A 6,4 ml d'une solution d'acide acétique (0,05M), on a ajouté goutte à goutte, sous agitation, à température ambiante, le mélange de 0,93 g de tétraméthoxysilane (TMOS), de 3,734 g de 3-glycidoxypropyltriméthoxysilane (GPTMS) et de 0,49 g de diméthyldiéthoxysilane (DMDES). Dès que la solution a été limpide et homogène, c'est-à-dire au bout de quelques minutes, on a introduit 3,5 ml de solution de NBB-5. On a laissé agiter à température ambiante. Deux heures après, on a réalisé un dépôt sur le substrat en rotation (ou spin-coating) tournant à 1500 tours par minute, et on l'a laissé sécher à température ambiante.

### Exemple 15 : NBB-4 + NBB-5 + matrice GPTMS/TMOS/DMDES (rapport molaire = 2,5/1/0,5)

A 6,4 ml d'une solution d'acide acétique (0,05M), on a ajouté goutte à goutte, sous agitation, à température ambiante, le mélange de 0,93 g de tétraméthoxysilane (TMOS), de 3,734 g de 3-glycidoxypropyltriméthoxysilane (GPTMS) et de 0,49 g de diméthyldiéthoxysilane (DMDES). 30 minutes plus tard, on a introduit 3,5 ml de solution de NBB-4. On a laissé agiter à température ambiante pendant 24 h. On a alors ajouté au mélange précédent 1 ml de solution de NBB-5. On a maintenu l'agitation pendant 2 h. On a réalisé ensuite un dépôt sur le substrat en rotation (ou spin-coating) tournant à 1500 tours par minute, et on l'a laissé sécher à température ambiante.

Dans les exemples 7 à 15, on a obtenu des films présentant des épaisseurs allant de 500 nm à plusieurs µm, plus particulièrement entre 2 et 6 µm, et préférentiellement entre 1,5 et 3 µm.

Ces films présentent une bonne stabilité des interfaces, à savoir entre la couche déposée et le substrat métallique, et entre la couche déposée et le dépôt primaire de peinture, ainsi qu'une bonne résistance aux déformations mécaniques telles que choc et pliage. La résistance à la corrosion, avec ou sans peinture est comparable à celle des couches chromatées.

## Revendications

1. Utilisation d'un matériau nanostructuré, comme revêtement protecteur de surfaces métalliques, ledit matériau nanostructuré comprenant des nanoblocs élémentaires fonctionnalisés en surface et une matrice polymère ou hybride organique/inorganique, la fonctionnalisation desdits nanoblocs élémentaires se faisant en présence d'un agent de fonctionnalisation qui est une molécule difonctionnelle dont une des fonctions présente une affinité pour la surface du nanobloc élémentaire et l'autre fonction interagit avec la matrice.

2. Utilisation selon la revendication 1, **caractérisée en ce que** les nanoblocs sont sous forme de cluster ou de nanoparticules.

3. Utilisation selon la revendication 2, **caractérisée en ce que** les nanoparticules présentent une taille allant de 2 à 100 nm, et de préférence de 2 à 50 nm.

4. Utilisation selon l'une quelconque des revendications précédentes, **caractérisée en ce que** les nanoblocs élémentaires sont synthétisés à partir de sels métalliques, par précipitation, ou à partir d'au moins un alcoxyde métallique ou halogénure métallique via un processus hydrolytique ou non hydrolytique, l'alcoxyde de métal ou halogénure métallique utilisé dans le processus hydrolytique répondant à l'une des formules suivantes :
MZₙ (1),
R'ₓMZₙ₋ₓ (2)
ou
L^{m}ₓMZₙ₋ₘₓ (3),
formules (1), (2) et (3) dans lesquelles :
M représente Al(III), Ce(III), Ce(IV), Si(IV), Zr(IV), Ti(IV) ou Sn(IV), de préférence Zr(IV) ou Ce(IV), le chiffre entre parenthèse étant la valence de l'atome M,
n représente la valence de l'atome M,
x est un nombre entier allant de 1 à n-1,
Z représente un atome d'halogène ou -OR,
R représente un groupe alkyle, de préférence comprenant 1 à 4 atomes de carbone ;
R' représente un groupe non hydrolysable choisi parmi les groupes alkyle, notamment en C₁₋₄, ; les groupes alcényle en particulier en C₂₋₄ ; les groupes alcynyle en particulier en C₂₋₄ ; les groupes aryle en particulier en C₆₋₁₀ ; les groupes méthacryle et méthacryloxy(alkyle en C₁₋₁₀) ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
L est un ligand complexant monodentate ou polydentate, de préférence polydentate ; et
m représente l'indice d'hydroxylation du ligand L.

5. Utilisation selon la revendication 4, **caractérisée en ce que** R représente un groupe méthyle ou éthyle ; R' représente un groupe non hydrolysable choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ; et L est un ligand complexant choisi parmi les acides carboxyliques, les β-dicétones, les β-cétoesters, les α et β-hydroxyacides, les acides aminés et les phosphonates.

6. Utilisation selon l'une quelconque des revendications précédentes, **caractérisée en ce que** la fonctionnalisation des nanoblocs élémentaires se fait simultanément lors de leur synthèse, en présence d'un agent de fonctionnalisation, ou lors d'une seconde étape suivant leur synthèse, en présence d'un agent de fonctionnalisation.

7. Utilisation selon l'une quelconque des revendications précédentes, **caractérisée en ce que** la fonction présentant une affinité pour la surface du nanobloc est choisie parmi les fonctions acide carboxylique, di-cétone, phosphate, phosphonate, α- ou β-hydroxyacide et agent complexant polydentate de métaux de transition.

8. Utilisation selon l'une quelconque des revendications précédentes, **caractérisée en ce que** la fonction pouvant interagir avec la matrice est choisie parmi les groupes amines primaires, secondaires et tertiaires, et les fonctions polymérisables telles que vinyle, acrylate ou méthacrylate.

9. Utilisation selon l'une quelconque des revendications précédentes, **caractérisée en ce que** l'agent de fonctionnalisation est choisi parmi l'acide 6-aminocaproïque et l'acide 2-aminoéthylphosphonique.

10. Utilisation selon l'une quelconque des revendications précédentes, **caractérisée en ce que** la matrice est une matrice hybride organique/inorganique obtenue par polycondensation d'au moins deux alcoxydes métalliques en présence d'un solvant, et éventuellement d'un catalyseur, de préférence acide comme l'acide acétique ou du CO₂, les alcoxydes métalliques ou sels métalliques ayant pour formules générales :
M'Z'_{n'} (IV)
R"_{x'}M' Z'_{n'-x'} (V)
L'_{m'x'}M' Z'_{m'x'} (VI)
Z'_{n'-1}M'-R'''-M Z'_{n'-1} (VII)
dans lesquelles :
n' représente la valence de l'atome métallique M', de préférence 3, 4 ou 5 ;
x' est un nombre entier allant de 1 à n'-1 ;
M' représente un atome métallique de valence III tel que Al ; de valence IV tel que Si, Ce, Zr et Ti ; ou de valence V tel que Nb ;
Z' représente un groupe hydrolysable choisi parmi les atomes d'halogène, les groupes alcoxy de préférence en C₁₋₄, les groupes aryloxy en particulier en C₆₋₁₀, les groupes acyloxy en particulier en C₁₋₄, et les groupes alkylcarbonyle en C₁₋₁₀ ;
R" représente un groupement non hydrolysable monovalent choisi parmi les groupes alkyle de préférence en C₁₋₄, les groupes alcényle en particulier en C₂₋₄, les groupes alcynyle en particulier en C₂₋₄, les groupes aryle en particulier en C₆₋₁₀, les groupes (méth)acryle, méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
R"' représente un groupement non hydrolysable divalent choisi parmi les groupes alkylène de préférence en C₁₋₄, les groupes alcénylène en particulier en C₂₋₄, les groupes alcynylène en particulier en C₂₋₄ les groupes arylène en particulier en C₆₋₁₀, les groupes méthacryle et méthacryloxy(alkyle en C₁₋₁₀), et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ; et
L' représente un ligand complexant de préférence polydentate,
m' représente l'indice d'hydroxylation du ligand L'.

11. Utilisation selon la revendication 10, **caractérisée en ce que** :
n' est égal à 4 ;
x' est un nombre entier allant de 1 à 3 ;
M' représente un atome de silicium, de cérium ou de zirconium ;
Z' représente un groupe hydrolysable choisi parmi Cl et Br, les groupes méthoxy, éthoxy, n-propoxy, i-propoxy, butoxy, phénoxy, acétoxy, propionyloxy et acétyle ;
R" représente un groupement non hydrolysable monovalent choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ;
R'" représente un groupement non hydrolysable divalent choisi parmi les groupes méthylène, éthylène, propylène, butylène, vinylène, 1-propénylène, 2-propénylène, buténylène, acétylénylène, propargylène, phénylène, naphthylène, méthacryle, méthacryloxypropyle, glycidyle et glycidyloxy(alkyle en C₁₋₁₀) ; et
L' représente un acide carboxylique, une β-dicétone, un β-cétoester, un α ou β-hydroxyacide, un acide aminé ou un phosphonate.

12. Utilisation selon la revendication 10 ou 11, **caractérisée en ce que** le solvant comprend 80 à 100% en poids d'eau par rapport au poids total du solvant, et éventuellement un alcool en C₁₋₄.

13. Utilisation selon l'une quelconque des revendications précédentes, dans l'aéronautique et l'aérospatiale.

14. Matériau nanostructuré **caractérisé en ce qu'**il comprend des nanoblocs élémentaires fonctionnalisés et une matrice hybride organique/inorganique préparée à partir d'au moins trois alcoxydes métalliques répondant aux formulations suivantes :
Si(OR¹)₄
R²Si(OR¹)₃
et
R³R⁴Si(OR¹)₂
dans lesquelles :
R¹ représente un groupe méthyle ou éthyle,
R² et R³ représentent chacun un groupe (méth)acrylate, vinyle, époxyalkyle ou époxyalcoxyalkyle dans lesquels le groupe alkyle est linéaire, ramifié et/ou cyclique, en C₁₋₁₀, et le groupe alcoxy comporte de 1 à 10 atomes, tels que 3,4-époxycyclohexyléthyle ou glycidyloxy(alkyle en C₁₋₁₀), et
R⁴ représente un groupe alkyle en C₁₋₁₀ tel que méthyle.

15. Matériau nanostructuré selon la revendication 14, **caractérisé en ce que** les nanoblocs sont sous forme de cluster ou de nanoparticules.

16. Matériau nanostructuré selon la revendication 15, **caractérisé en ce que** les nanoparticules présentent une taille allant de 2 à 100 nm, et de préférence de 2 à 50 nm.

17. Matériau nanostructuré selon l'une quelconque des revendications 14 à 16, **caractérisé en ce que** les nanoblocs élémentaires sont synthétisés à partir de sels métalliques par précipitation, ou d'au moins un alcoxyde métallique ou halogénure métallique par un processus hydrolytique ou non-hydrolytique, ledit alcoxyde métallique ou halogénure métallique utilisé dans le processus hydrolytique répondant à l'une des formulations suivantes :
MZₙ (1),
R'ₓMZₙ₋ₓ (2)
ou
L^{m}ₓMZₙ₋ₘₓ (3),
formules (1), (2) et (3) dans lesquelles :
M représente Al(III), Ce(III), Ce(IV), Si(IV), Zr(IV), Ti(IV), Sn(IV), de préférence Zr(IV) ou Ce(IV), le chiffre entre parenthèse étant la valence de l'atome métallique,
n représente la valence de l'atome M,
x est un nombre entier allant de 1 à n-1,
Z représente un atome d'halogène ou -OR ;
R représente un groupe alkyle, de préférence comprenant 1 à 4 atomes de carbone ;
R' représente un groupe non hydrolysable choisi parmi les groupes alkyle, notamment en C₁₋₄, ; les groupes alcényle en particulier en C₂₋₄ ; les groupes alcynyle en particulier en C₂₋₄ ; les groupes aryle en particulier en C₆₋₁₀ ; les groupes méthacryle et méthacryloxy(alkyle en C₁₋₁₀) ; et les groupes époxyalkyle ou époxyalcoxyalkyle dans lesquels le groupe alkyle est linéaire, ramifié ou cyclique, en C₁₋₁₀, et le groupe alcoxy comporte de 1 à 10 atomes de carbone ;
L est un ligand complexant monodentate ou polydentate, de préférence polydentate ; et
m représente l'indice d'hydroxylation du ligand L.

18. Matériau nanostructuré selon la revendication 17, **caractérisé en ce que** R représente un groupe méthyle ou éthyle ; R' représente un groupe non hydrolysable choisi parmi les groupes méthyle, éthyle, propyle, butyle, vinyle, 1-propényle, 2-propényle, butényle, acétylényle, propargyle, phényle, naphthyle, méthacryle, méthacryloxypropyle, glycidyle et glycidyloxy(alkyle en C₁₋₁₀) ; et L est un ligand complexant choisi parmi les acides carboxyliques, les β-dicétones, les β-cétoesters, les α et β-hydroxyacides, les amino-alcools et les phosphonates.

19. Matériau nanostructuré selon l'une quelconque des revendications 14 à 18, **caractérisé en ce que** les nanoblocs élémentaires sont fonctionnalisés en surface au moyen d'un agent de fonctionnalisation qui est une molécule difonctionnelle dont une des fonctions présente une affinité pour la surface du nanobloc élémentaire et l'autre fonction interagit avec la matrice.

20. Matériau nanostructuré selon la revendication 19, **caractérisé en ce que** la fonction présentant une affinité pour la surface du nanobloc est choisie parmi les fonctions acide carboxylique, dicétone, phosphate, phosphonate, α- ou β-hydroxyacide et agent complexant polydentate de métaux de transition.

21. Matériau nanostructuré selon la revendication 19 ou 20, **caractérisé en ce que** la fonction pouvant interagir avec la matrice est choisie parmi les groupes amines primaires, secondaires et tertiaires, et les fonctions polymérisables telles que vinyle, acrylate ou méthacrylate.

22. Matériau nanostructuré selon l'une quelconque des revendications 19 à 21, **caractérisé en ce que** l'agent de fonctionnalisation est choisi parmi l'acide 6-aminocaproïque et l'acide 2-aminoéthylphosphonique.

23. Procédé de préparation d'un matériau nanostructuré selon l'une quelconque des revendications 14 à 22, comprenant les étapes consistant à :
d'une part
a) préparer les nanoblocs élémentaires par un processus hydrolytique ou non-hydrolytique à partir d'au moins un alcoxyde métallique ou halogénure métallique tel que défini dans les revendications 17 et 18, et
b) fonctionnaliser les nanoblocs élémentaires au moyen d'un agent de fonctionnalisation,
d'autre part
c) préparer la matrice hybride organique/inorganique par voie sol-gel, à partir des trois alcoxydes de silicium tels que définis dans la revendication 14, la préparation par voie sol-gel se faisant en présence d'un solvant, et éventuellement d'un catalyseur,
puis
d) mélanger les nanoblocs élémentaires fonctionnalisés obtenus à l'étape b) et la matrice obtenue à l'étape c).

24. Procédé de préparation selon la revendication 23, **caractérisé en ce qu'**au moins un additif est ajouté lors de l'étape a) ou lors de l'étape d) ou lors des deux étapes a) et d).

25. Procédé de préparation selon la revendication 24, **caractérisé en ce que** l'additif est choisi parmi des agents tensioactifs pour améliorer la mouillabilité du sol sur le substrat métallique, des colorants, des agents de réticulation, des agents de couplage et des inhibiteurs de corrosion.

26. Article **caractérisé en ce qu'**il comprend un substrat métallique, de préférence en titane, en aluminium ou en un de leurs alliages, et un matériau nanostructuré selon l'une quelconque des revendications 14 à 22.

27. Procédé de préparation d'un article selon la revendication 26, caractérisé en qu'il comprend une étape de trempage dans un bain, de dépôt sur substrat en rotation, d'aspersion, d'enduction laminaire ou de dépôt au pinceau d'au moins un matériau nanostructuré selon l'une quelconque des revendications 14 à 22.

## Patentansprüche

1. Verwendung eines nanostrukturierten Materials als Schutzbeschichtung für Metalloberflächen, wobei das nanostrukturierte Material oberflächenfunktionalisierte Nanogrundblöcke und eine Polymermatrix oder organisch/anorganische Hybridmatrix umfasst, wobei die Funktionalisierung der Nanogrundblöcke in Gegenwart eines Funktionalisierungsmittels erfolgt, bei dem es sich um ein bifunktionelles Molekül handelt, wobei eine seiner Funktionen eine Affinität zur Oberfläche des Nanogrundblocks aufweist und die andere Funktion mit der Matrix wechselwirkt.

2. Verwendung nach Anspruch 1, **dadurch gekennzeichnet, dass** die Nanoblöcke in Form von Clustern oder in Form von Nanopartikeln vorliegen.

3. Verwendung nach Anspruch 2, **dadurch gekennzeichnet, dass** die Nanopartikel eine Größe im Bereich von 2 bis 100 nm und vorzugsweise von 2 bis 50 nm aufweisen.

4. Verwendung nach einem der vorhergehenden Ansprüche, **dadurch gekennzeichnet, dass** die Nanogrundblöcke aus Metallsalzen durch Ausfällung oder aus mindestens einem Metallalkoxid oder Metallhalogenid durch ein hydrolytisches oder nichthydrolytisches Verfahren synthetisiert werden, wobei das bei dem hydrolytischen Verfahren verwendete Metallalkoxid oder Metallhalogenid einer der folgenden Formeln entspricht:
MZₙ (1),
R'ₓMZₙ₋ₓ (2)
oder
L^{m}ₓMZₙ₋ₘₓ (3),
wobei in den Formeln (1), (2) und (3):
M für Al(III), Ce(III), Ce(IV), Si(IV), Zr(IV), Ti(IV) oder Sn(IV), vorzugsweise Zr(IV) oder Ce(IV), steht, wobei die Zahl in Klammern die Wertigkeit des Atoms M ist,
n für die Wertigkeit des Atoms M steht,
x eine ganze Zahl im Bereich von 1 bis n-1 ist,
Z für ein Halogenatom oder -OR steht,
R für eine Alkylgruppe, vorzugsweise mit 1 bis 4 Kohlenstoffatomen, steht,
R' für eine nicht hydrolysierbare Gruppe steht, die aus Alkylgruppen, insbesondere C₁₋₄-Alkylgruppen, Alkenylgruppen, insbesondere C₂₋₄-Alkenylgruppen, Alkinylgruppen, insbesondere C₂₋₄-Alkinylgruppen, Arylgruppen, insbesondere C₆₋₁₀-Arylgruppen, Methacryl- und Methacryloxy (C₁₋₁₀-alkyl) gruppen und Epoxyalkyl- oder Epoxyalkoxyalkylgruppen, in denen die Alkylgruppe eine lineare, verzweigte oder cyclische C₁₋₁₀-Alkylgruppe ist und die Alkoxygruppe 1 bis 10 Kohlenstoffatome enthält, ausgewählt ist, L ein einzähniger oder mehrzähniger, vorzugsweise mehrzähniger, komplexierender Ligand ist und
m für den Hydroxylierungsgrad des Liganden L steht.

5. Verwendung nach Anspruch 4, **dadurch gekennzeichnet, dass** R für eine Methyl- oder Ethylgruppe steht, R' für eine nicht hydrolysierbare Gruppe steht, die aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl- und Glycidyloxy(C₁₋₁₀-alkyl)gruppen ausgewählt ist, und L ein komplexierender Ligand ist, der aus Carbonsäuren, β-Diketonen, β-Ketoestern, α- und β-Hydroxysäuren, Aminosäuren und Phosphonaten ausgewählt ist.

6. Verwendung nach einem der vorhergehenden Ansprüche, **dadurch gekennzeichnet, dass** die Funktionalisierung der Nanogrundblöcke gleichzeitig während ihrer Synthese in Gegenwart eines Funktionalisierungsmittels oder während eines zweiten Schritts nach ihrer Synthese in Gegenwart eines Funktionalisierungsmittels erfolgt.

7. Verwendung nach einem der vorhergehenden Ansprüche, **dadurch gekennzeichnet, dass** die Funktion, die eine Affinität zur Oberfläche des Nanoblocks aufweist, aus Carbonsäure-, Diketon-, Phosphat-, Phosphonat- und α- und β-Hydroxysäurefunktionen und einem mehrzähnigen Komplexbildner für Übergangsmetalle ausgewählt ist.

8. Verwendung nach einem der vorhergehenden Ansprüche, **dadurch gekennzeichnet, dass** die Funktion, die mit der Matrix wechselwirken kann, aus primären, sekundären und tertiären Amingruppen und polymerisierbaren Funktionen wie Vinyl, Acrylat oder Methacrylat ausgewählt ist.

9. Verwendung nach einem der vorhergehenden Ansprüche, **dadurch gekennzeichnet, dass** das Funktionalisierungsmittel aus 6-Aminocapronsäure und 2-Aminoethylphosphonsäure ausgewählt ist.

10. Verwendung nach einem der vorhergehenden Ansprüche, **dadurch gekennzeichnet, dass** es sich bei der Matrix um eine durch Polykondensation von mindestens zwei Metallalkoxiden in Gegenwart eines Lösungsmittels und gegebenenfalls eines Katalysators, vorzugsweise einer Säure wie Essigsäure oder CO₂, erhaltene organisch/anorganische Hybridmatrix handelt, wobei die Metallalkoxide oder Metallsalze die folgenden allgemeinen Formeln aufweisen:
M'Z'_{n'} (IV),
R"_{x'}M'Z'_{n'-x'} (V),
L'_{m'x'}M'Z'_{m'x'} (VI)
und
Z'_{n'-1}M'-R'''-MZ'_{n'-1} (VII),
worin:
n' für die Wertigkeit des Metallatoms M', vorzugsweise 3, 4 oder 5, steht,
x' eine ganze Zahl im Bereich von 1 bis n'-1 ist,
M' für ein III-wertiges Metallatom wie Al, ein IVwertiges Metallatom wie Si, Ce, Zr und Ti oder ein V-wertiges Metallatom wie Nb steht,
Z' für eine hydrolysierbare Gruppe steht, die aus Halogenatomen, Alkoxygruppen, vorzugsweise C₁₋₄-Alkoxygruppen, Aryloxygruppen, insbesondere C₆₋₁₀-Aryloxygruppen, Acyloxygruppen, insbesondere C₁₋₄-Acyloxygruppen, und C₁₋₁₀-Alkylcarbonylgruppen ausgewählt ist,
R" für eine einwertige nicht hydrolysierbare Gruppe steht, die aus Alkylgruppen, vorzugsweise C₁₋₄-Alkylgruppen, Alkenylgruppen, insbesondere C₂₋₄-Alkenylgruppen, Alkinylgruppen, insbesondere C₂₋₄-Alkinylgruppen, Arylgruppen, insbesondere C₆₋₁₀-Arylgruppen, (Meth)acrylgruppen, Methacryloxy(C₁₋₁₀-alkyl)gruppen und Epoxyalkyl- oder Epoxyalkoxyalkylgruppen, in denen die Alkylgruppe eine lineare, verzweigte oder cyclische C₁₋₁₀-Alkylgruppe ist und die Alkoxygruppe 1 bis 10 Kohlenstoffatome enthält, ausgewählt ist,
R''' für eine zweiwertige nicht hydrolysierbare Gruppe steht, die aus Alkylengruppen, vorzugsweise C₁₋₄-Alkylengruppen, Alkenylengruppen, insbesondere C₂₋₄-Alkenylengruppen, Alkinylengruppen, insbesondere C₂₋₄-Alkinylengruppen, Arylengruppen, insbesondere C₆₋₁₀-Arylengruppen, Methacryl- und Methacryloxy(C₁₋₁₀-alkyl)gruppen und Epoxyalkyl- oder Epoxyalkoxyalkylgruppen, in denen die Alkylgruppe eine lineare, verzweigte oder cyclische C₁₋₁₀-Alkylgruppe ist und die Alkoxygruppe 1 bis 10 Kohlenstoffatome enthält, ausgewählt ist,
L' für einen komplexierenden Liganden, der vorzugsweise mehrzähnig ist, steht,
m' für den Hydroxylierungsgrad des Liganden L' steht.

11. Verwendung nach Anspruch 10, **dadurch gekennzeichnet, dass**:
n' = 4 ist,
x' eine ganze Zahl im Bereich von 1 bis 3 ist,
M' für ein Silicium-, Cer- oder Zirconiumatom steht,
Z' für eine hydrolysierbare Gruppe steht, die aus Cl und Br und Methoxy-, Ethoxy-, n-Propoxy-, i-Propoxy-, Butoxy-, Phenoxy-, Acetoxy-, Propionyloxy- und Acetylgruppen ausgewählt ist,
R" für eine einwertige nicht hydrolysierbare Gruppe steht, die aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl- und Glycidyloxy(C₁₋₁₀-alkyl)gruppen ausgewählt ist,
R''' für eine zweiwertige nicht hydrolysierbare Gruppe steht, die aus Methylen-, Ethylen-, Propylen-, Butylen-, Vinylen-, 1-Propenylen-, 2-Propenylen-, Butenylen-, Acetylenylen-, Propargylen-, Phenylen-, Naphthylen-, Methacryl-, Methacryloxypropyl-, Glycidyl- und Glycidyloxy (C₁₋₁₀-alkyl) gruppen ausgewählt ist, und
L' für eine Carbonsäure, ein β-Diketon, einen β-Ketoester, eine α- oder β-Hydroxysäure, eine Aminosäure oder ein Phosphonat steht.

12. Verwendung nach Anspruch 10 oder 11, **dadurch gekennzeichnet, dass** das Lösungsmittel 80 bis 100 Gew.-% Wasser, bezogen auf das Gesamtgewicht des Lösungsmittels, und gegebenenfalls einen C₁₋₄-Alkohol umfasst.

13. Verwendung nach einem der vorhergehenden Ansprüche in der Luft- und Raumfahrt.

14. Nanostrukturiertes Material, **dadurch gekennzeichnet, dass** es funktionalisierte Nanogrundblöcke und eine organisch/anorganische Hybridmatrix umfasst, die aus mindestens drei Metallalkoxiden, die den folgenden Formeln entsprechen, hergestellt ist:
Si(OR¹)₄,
R²Si(OR¹)₃
und
R³R⁴Si(OR¹)₂,
worin:
R¹ für eine Methyl- oder Ethylgruppe steht,
R² und R³ jeweils für eine (Meth)acrylat-, Vinyl-, Epoxyalkyl- oder Epoxyalkoxyalkylgruppe, in denen die Alkylgruppe eine lineare, verzweigte oder cyclische C₁₋₁₀-Alkylgruppe ist und die Alkoxygruppe 1 bis 10 Kohlenstoffatome enthält, wie 3,4-Epoxycyclohexylethyl oder Glycidyloxy (C₁₋₁₀-alkyl) , stehen und
R⁴ für eine C₁₋₁₀-Alkylgruppe wie Methyl steht.

15. Nanostrukturiertes Material nach Anspruch 14, **dadurch gekennzeichnet, dass** die Nanoblöcke in Form von Clustern oder in Form von Nanopartikeln vorliegen.

16. Nanostrukturiertes Material nach Anspruch 15, **dadurch gekennzeichnet, dass** die Nanopartikel eine Größe im Bereich von 2 bis 100 nm und vorzugsweise von 2 bis 50 nm aufweisen.

17. Nanostrukturiertes Material nach einem der Ansprüche 14 bis 16, **dadurch gekennzeichnet, dass** die Nanogrundblöcke aus Metallsalzen durch Ausfällung oder aus mindestens einem Metallalkoxid oder Metallhalogenid durch ein hydrolytisches oder nichthydrolytisches Verfahren synthetisiert werden, wobei das Metallalkoxid oder Metallhalogenid über ein hydrolytisches Verfahren, wobei das Metallalkoxid einer der folgenden Formeln entspricht:
MZₙ (1),
R'ₓMZₙ₋ₓ (2)
oder
L^{m}ₓMZₙ₋ₘₓ (3),
wobei in den Formeln (1), (2) und (3):
M für Al(III), Ce(III), Ce(IV), Si(IV), Zr(IV), Ti(IV) oder Sn(IV), vorzugsweise Zr(IV) oder Ce(IV), steht, wobei die Zahl in Klammern die Wertigkeit des Metallatoms ist,
n für die Wertigkeit des Atoms M steht,
x eine ganze Zahl im Bereich von 1 bis n-1 ist,
Z für ein Halogenatom oder -OR steht,
R für eine Alkylgruppe, vorzugsweise mit 1 bis 4 Kohlenstoffatomen, steht,
R' für eine nicht hydrolysierbare Gruppe steht, die aus Alkylgruppen, insbesondere C₁₋₄-Alkylgruppen, Alkenylgruppen, insbesondere C₂₋₄-Alkenylgruppen, Alkinylgruppen, insbesondere C₂₋₄-Alkinylgruppen, Arylgruppen, insbesondere C₆₋₁₀-Arylgruppen, Methacryl- und Methacryloxy (C₁₋₁₀-alkyl) gruppen und Epoxyalkyl- oder Epoxyalkoxyalkylgruppen, in denen die Alkylgruppe eine lineare, verzweigte oder cyclische C₁₋₁₀-Alkylgruppe ist und die Alkoxygruppe 1 bis 10 Kohlenstoffatome enthält, ausgewählt ist, L ein einzähniger oder mehrzähniger, vorzugsweise mehrzähniger, komplexierender Ligand ist und
m für den Hydroxylierungsgrad des Liganden L steht.

18. Nanostrukturiertes Material nach Anspruch 17, **dadurch gekennzeichnet, dass** R für eine Methyl- oder Ethylgruppe steht, R' für eine nicht hydrolysierbare Gruppe steht, die aus Methyl-, Ethyl-, Propyl-, Butyl-, Vinyl-, 1-Propenyl-, 2-Propenyl-, Butenyl-, Acetylenyl-, Propargyl-, Phenyl-, Naphthyl-, Methacryl-, Methacryloxypropyl-, Glycidyl- und Glycidyloxy(C₁₋₁₀-alkyl)gruppen ausgewählt ist, und L ein komplexierender Ligand ist, der aus Carbonsäuren, β-Diketonen, β-Ketoestern, α- und β-Hydroxysäuren, Aminoalkoholen und Phosphonaten ausgewählt ist.

19. Nanostrukturiertes Material nach einem der Ansprüche 14 bis 18, **dadurch gekennzeichnet, dass** die Nanogrundblöcke mit Hilfe eines Funktionalisierungsmittels oberflächenfunktionalisiert sind, bei dem es sich um ein bifunktionelles Molekül handelt, wobei eine der Funktionen eine Affinität zur Oberfläche des Nanogrundblocks aufweist und die andere Funktion mit der Matrix wechselwirkt.

20. Nanostrukturiertes Material nach Anspruch 19, **dadurch gekennzeichnet, dass** die Funktion, die eine Affinität zur Oberfläche des Nanoblocks aufweist, aus Carbonsäure-, β-Diketon-, Phosphat-, Phosphonat- und α- oder β-Hydroxysäurefunktionen und einem mehrzähnigen Komplexbildner für Übergangsmetalle ausgewählt ist.

21. Nanostrukturiertes Material nach Anspruch 19 oder 20, **dadurch gekennzeichnet, dass** die Funktion, die mit der Matrix wechselwirken kann, aus primären, sekundären und tertiären Amingruppen und polymerisierbaren Funktionen wie Vinyl, Acrylat oder Methacrylat ausgewählt ist.

22. Nanostrukturiertes Material nach einem der Ansprüche 19 bis 21, **dadurch gekennzeichnet, dass** das Funktionalisierungsmittel aus 6-Aminocapronsäure und 2-Aminoethylphosphonsäure ausgewählt ist.

23. Verfahren zur Herstellung eines nanostrukturierten Materials nach einem der Ansprüche 14 bis 22, das folgende Schritte umfasst:
einerseits
a) Herstellen der Nanogrundblöcke durch ein hydrolytisches oder nichthydrolytisches Verfahren aus mindestens einem Metallalkoxid oder Metallhalogenid gemäß einem der Ansprüche 17 und 18 und
b) Funktionalisieren der Nanogrundblöcke mit Hilfe eines Funktionalisierungsmittels,
andererseits
c) Herstellen der organisch/anorganischen Hybridmatrix nach dem Sol-Gel-Verfahren aus drei Siliciumalkoxiden gemäß Anspruch 14, wobei die Herstellung nach dem Sol-Gel-Verfahren in Gegenwart eines Lösungsmittels und gegebenenfalls eines Katalysators erfolgt,
dann
d) Mischen der in Schritt b) erhaltenen funktionalisierten Nanogrundblöcke und der in Schritt c) erhaltenen Matrix.

24. Herstellungsverfahren nach Anspruch 23, **dadurch gekennzeichnet, dass** während Schritt a) oder während Schritt d) oder während beider Schritte a) und d) mindestens ein Additiv zugegeben wird.

25. Herstellungsverfahren nach Anspruch 24, **dadurch gekennzeichnet, dass** das Additiv aus Tensiden zur Verbesserung der Benetzbarkeit des Sols auf dem Metallsubstrat, Farbmitteln, Vernetzungsmitteln, Kupplungsmitteln und Korrosionsinhibitoren ausgewählt ist.

26. Gegenstand, **dadurch gekennzeichnet, dass** er ein Metallsubstrat, vorzugsweise aus Titan, Aluminium oder einer ihrer Legierungen, und ein nanostrukturiertes Material nach einem der Ansprüche 14 bis 22 umfasst.

27. Verfahren zur Herstellung eines Gegenstands nach Anspruch 26, **dadurch gekennzeichnet, dass** es einen Schritt des Eintauchens in ein Bad, des Aufbringens mindestens eines nanostrukturierten Materials nach einem der Ansprüche 14 bis 22 auf ein Substrat durch Schleuder-, Spritz- oder Meniskusbeschichtung oder des Aufbringens mindestens eines nanostrukturierten Materials nach einem der Ansprüche 14 bis 22 mit einem Pinsel umfasst.

## Claims

1. Use of a nanostructured material, as a protective coating for metallic surfaces, said nanostructured material comprising nano-building blocks which are surface-functionalized and a polymer or hybrid organic/inorganic matrix, the functionalization of said nano-building blocks being carried out in the presence of a functionalizing agent which is a bifunctional molecule of which one of the functional groups has an affinity for the surface of the nano-building block and the other functional group interacts with the matrix.

2. Use according to Claim 1, **characterized in that** the nanoblocks are in cluster form or in the form of nanoparticles.

3. Use according to Claim 2, **characterized in that** the nanoparticles have a size ranging from 2 to 100 nm; and preferably from 2 to 50 nm.

4. Use according to any one of the preceding claims, **characterized in that** the nano-building blocks are synthesized from metal salts, by precipitation or from at least one metal alkoxide or metal halide via a hydrolytic or non-hydrolytic process, the metal alkoxide or metal halide used in the hydrolytic process corresponding to one of the following formulas:
MZₙ (1),
R'ₓMZₙ₋ₓ (2)
or
L^{m}ₓMZₙ₋ₘₓ (3),
formulas (1), (2) and (3) in which:
M represents Al(III), Ce(III), Ce(IV), Si(IV), Zr(IV), Ti(IV) or Sn(IV), preferably Zr(IV) or Ce(IV), the number between brackets being the valency of the M atom;
n represents the valency of the M atom;
x is an integer ranging from 1 to n-1;
Z represents a halogen atom or -OR;
R represents an alkyl group, preferably comprising 1 to 4 carbon atoms;
R' represents a non-hydrolysable group chosen from alkyl groups, especially C₁₋₄ alkyl groups; alkenyl groups, in particular C₂₋₄ alkenyl groups; alkynyl groups, in particular C₂₋₄ alkynyl groups; aryl groups, in particular C₆₋₁₀ aryl groups; methacryl and methacryloxy (C₁₋₁₀ alkyl) groups; and epoxyalkyl or epoxyalkoxyalkyl groups in which the alkyl group is linear, branched or cyclic and is a C₁₋₁₀ alkyl group, and the alkoxy group comprises from 1 to 10 carbon atoms;
L is a monodentate or polydentate, preferably polydentate, complexing ligand; and
m represents the degree of hydroxylation of the ligand L.

5. Use according to Claim 4, **characterized in that** R represents a methyl or ethyl group; R' represents a non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl and glycidyloxy(C₁₋₁₀ alkyl) ; and L is a complexing ligand chosen from carboxylic acids, β-diketones, β-ketoesters, α- and β-hydroxy acids, amino acids and phosphonates.

6. Use according to any one of the preceding claims, **characterized in that** the functionalization of the nano-building blocks is carried out simultaneously during their synthesis, in the presence of a functionalizing agent or during a second step following their synthesis, in the presence of a functionalizing agent.

7. Use according to any one of the preceding claims, **characterized in that** the functional group having an affinity for the nanoblock surface is chosen from carboxylic acid, diketone, phosphate, phosphonate and α- and β-hydroxy acid functional groups and a polydentate complexing agent for transition metals.

8. Use according to any one of the preceding claims, **characterized in that** the functional group which may interact with the matrix is chosen from primary, secondary and tertiary amine groups and polymerizable functional groups such as vinyl, acrylate or methacrylate groups.

9. Use according to any one of the preceding claims, **characterized in that** the functionalizing agent is chosen from 6-aminocaproic acid and 2-aminoethylphosphonic acid.

10. Use according to any one of the preceding claims, **characterized in that** the matrix is a hybrid organic/inorganic matrix obtained by polycondensation of at least two metal alkoxides in the presence of a solvent and optionally a catalyst preferably an acid such as acetic acid, or CO₂, metal alkoxides or metal salts having the general formulae:
M'Z'_{n'} (IV)
R"_{x'}M'Z'_{n'-x'} (V)
L'_{m'x'}M'Z'_{m'x'} (VI)
Z'_{n'-1}M'-R'''-MZ'_{n'-1} (VII)
in which:
n' represents the valency of the metal atom M', preferably 3, 4 or 5;
x' is an integer ranging from 1 to n'-1;
M' represents a metal atom with a valency of III such as Al; with a valency of IV such as Si, Ce, Zr and Ti; or with a valency of V such as Nb;
Z' represents a hydrolysable group chosen from halogen atoms, alkoxy groups, preferably C₁₋₄ alkoxy groups, aryloxy groups, in particular C₆₋₁₀ aryloxy groups, acyloxy groups, in particular C₁₋₄ acyloxy groups and C₁₋₁₀ alkylcarbonyl groups;
R" represents a monovalent non-hydrolysable group chosen from alkyl groups, preferably C₁₋₄ alkyl groups; alkenyl groups, in particular C₂₋₄ alkenyl groups; alkynyl groups, in particular C₂₋₄ alkynyl groups; aryl groups, in particular C₆₋₁₀ aryl groups; (meth) acryl and methacryloxy (C₁₋₁₀ alkyl) groups; and epoxy alkyl or epoxyalkoxyalkyl groups in which the alkyl group is linear, branched or cyclic and is a C₁₋₁₀ alkyl group, and the alkoxy group comprises from 1 to 10 carbon atoms;
R"' represents a divalent non-hydrolysable group chosen from alkylene groups, preferably C₁₋₄ alkylene groups; alkenylene groups, in particular C₂₋₄ alkenylene groups; alkynylene groups, in particular C₂₋₄ alkynylene groups; arylene groups, in particular C₆₋₁₀ arylene groups; methacryl and methacryloxy (C₁₋₁₀ alkyl) groups; and epoxyalkyl or epoxyalkoxyalkyl groups in which the alkyl group is linear, branched or cyclic and is a C₁₋₁₀ alkyl group, and the alkoxy group comprises from 1 to 10 carbon atoms; and
L' represents a preferably polydentate complexing ligand; and
m' represents the degree of hydroxylation of the ligand L'.

11. Use according to Claim 10, **characterized in that**:
n' is equal to 4;
x' is an integer ranging from 1 to 3;
M' represents a silicon, cerium or zirconium atom;
Z' represents a hydrolysable group chosen from Cl and Br, methoxy, ethoxy, n-propoxy, i-propoxy, butoxy, phenoxy, acetoxy, propionyloxy and acetyl groups;
R" represents a monovalent non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl and glycidyloxy(C₁₋₁₀ alkyl) groups;
R"' represents a divalent non-hydrolysable group chosen from methylene, ethylene, propylene, butylene, vinylene, 1-propenylene, 2-propenylene, butenylene, acetylenylene, propargylene, phenylene, naphthylene, methacryl, methacryloxypropyl, glycidyl and glycidyloxy(C₁₋₁₀ alkyl) groups; and
L' represents a carboxylic acid, a β-diketone, a β-ketoester, an α or β-hydroxy acid, an amino acid or a phosphonate.

12. Use according to Claim 10 or 11, **characterized in that** the solvent comprises 80 to 100% by weight of water relative to the total weight of the solvent, and optionally a C₁₋₄ alcohol.

13. Use according to any one of the preceding claims, in aeronautics and aerospace engineering.

14. Nanostructured material **characterized in that** it comprises functionalized nano-building blocks and a hybrid organic/inorganic matrix prepared from at least three metal alkoxides corresponding to the following formulae:
Si(OR¹)₄
R²Si(OR¹)₃
and
R³R⁴Si(OR¹)₂
in which:
R¹ represents a methyl or ethyl group,
R² and R³ each represent a (meth)acrylate, vinyl, epoxyalkyl or epoxyalkoxyalkyl group in which the alkyl group is linear, branched and/or cyclic, and is a C₁₋₁₀ alkyl group, and the alkoxy group comprises from 1 to 10 atoms, such as 3,4-epoxycyclohexylethyl or glycidyloxy(C₁₋₁₀ alkyl) ; and
R⁴ represents a C₁₋₁₀ alkyl group, such as a methyl group.

15. Nanostructured material according to Claim 14, **characterized in that** the nanoblocks are in cluster form or in the form of nanoparticles.

16. Nanostructured material according to Claim 15, **characterized in that** the nanoparticles have a size ranging from 2 to 100 nm, and preferably 2 to 50 nm.

17. Nanostructured material according to any one of Claims 14 to 16, **characterized in that** the nano-building blocks are synthesized from metal salts, by precipitation, or from at least one metal alkoxide or metal halide via a hydrolytic or non-hydrolytic process, said metal alkoxide or metal halide via a hydrolytic process, the metal alkoxide corresponding to one of the following formulae:
MZₙ (1)
R'ₓMZₙ₋ₓ (2)
or
L^{m}ₓMZₙ₋ₘₓ (3),
formulas (1), (2) and (3) in which:
M represents Al(III), Ce(III), Ce(IV), Si(IV), Zr(IV), Ti(IV), Sn(IV), preferably Zr(IV) or Ce(IV), the number between brackets being the valency of the metal atom;
n represents the valency of the M atom;
x is an integer ranging from 1 to n-1;
Z represents a halogen atom or -OR;
R represents an alkyl group, preferably comprising 1 to 4 carbon atoms;
R' represents a non-hydrolysable group chosen from alkyl groups, especially C₁₋₄ alkyl groups; alkenyl groups, in particular C₂₋₄ alkenyl groups; alkynyl groups, in particular C₂₋₄ alkynyl groups; aryl groups, in particular C₆₋₁₀ aryl groups; methacryl and methacryloxy(C₁₋₁₀ alkyl) groups; and epoxyalkyl or epoxyalkoxyalkyl groups in which the alkyl group is linear, branched or cyclic and is a C₁₋₁₀ alkyl group, and the alkoxy group comprises from 1 to 10 carbon atoms;
L is a monodentate or polydentate, preferably polydentate, complexing ligand; and
m represents the degree of hydroxylation of the ligand L.

18. Nanostructured material according to Claim 17, **characterized in that** R represents a methyl or ethyl group; R' represents a non-hydrolysable group chosen from methyl, ethyl, propyl, butyl, vinyl, 1-propenyl, 2-propenyl, butenyl, acetylenyl, propargyl, phenyl, naphthyl, methacryl, methacryloxypropyl, glycidyl and glycidyloxy (C₁₋₁₀ alkyl) groups; and L is a complexing ligand chosen from carboxylic acids, β-diketones, β-ketoesters, α- and β-hydroxy acids, amino acids and phosphonates.

19. Nanostructured material according to any one of Claims 14 to 18, **characterized in that** the nano-building blocks are surface-functionalized using a functionalizing agent which is a bifunctional molecule of which one of the functional groups has an affinity for the surface of the nano-building block and the other functional group interacts with the matrix.

20. Nanostructured material according to Claim 19, **characterized in that** the functional group having an affinity for the nanoblock surface is chosen from carboxylic acid, diketone, phosphate, phosphonate and α- or β-hydroxy acid functional groups and a polydentate complexing agent for transition metals.

21. Nanostructured material according to Claim 19 or 20, **characterized in that** the functional group which may interact with the matrix is chosen from primary, secondary and tertiary amine groups and polymerizable functional groups such as vinyl, acrylate or methacrylate groups.

22. Nanostructured material according to any one of Claims 19 to 21, **characterized in that** the functionalizing agent is chosen from 6-aminocaproic acid and 2-aminoethylphosphonic acid.

23. Method for preparing a nanostructured material according to any one of Claims 14 to 22, comprising the steps consisting in:
on the one hand
a) preparing nano-building blocks by a hydrolytic or non-hydrolytic process from at least one metal alkoxide or metal halide as defined in Claims 17 and 18; and
b) functionalizing the nano-building blocks using a functionalizing agent,
on the other hand
c) preparing the hybrid organic/inorganic matrix by a sol-gel process, from three silicon alkoxides as defined in Claim 14, the preparation by a sol-gel process being carried out in the presence of a solvent, and optionally a catalyst;
then
d) mixing the functionalized nano-building blocks obtained in step b) with the matrix obtained in step c).

24. Preparation method according to Claim 23, **characterized in that** at least one additive is added during step a) or during step d) or during both steps a) and d) .

25. Preparation method according to Claim 24, **characterized in that** the additive is chosen from surfactants in order to improve the wettability of the sol onto the metallic substrate, colourants, crosslinking agents, coupling agents, and corrosion inhibitors.

26. Article **characterized in that** it comprises a metallic substrate, preferably made of titanium, aluminium, or from one of their alloys, and a nanostructured material according to any one of Claims 14 to 22.

27. Method for preparing an article according to Claim 26, **characterized in that** it comprises a step of dipping in a bath, depositing onto the substrate by spin, spray or laminar-flow coating or depositing using a brush at least one nanostructured material according to any one of Claims 14 to 22.
